# EUROPEAN PATENT APPLICATION

(11) **EP 4 495 061 A1**
(43) Date of publication of application: **22.01.2025**
(21) Application number: 23186902.5
(22) Date of filing: 21.07.2023
(51) Int. Cl.: C01B 3/38, C01B 3/48

(54) **PROCESS FOR PRODUCING A SYNTHESIS GAS**

(71) Applicant: Johnson Matthey Public Limited Company, London EC4A 4AB (GB)
(72) Inventor: The designation of the inventor has not yet been filed
(74) Representative: Johnson Matthey Plc

(57) **Abstract**

A process for producing a synthesis gas, comprising the steps of:
(i) autothermally reforming a feed gas containing methane with an oxygen-containing gas in an autothermal reformer to produce a crude synthesis gas containing hydrogen, carbon monoxide, carbon dioxide and steam at a temperature above 850 °C; (ii) cooling the crude synthesis gas to a temperature in the range 350 to 400 °C; (iii) passing the cooled crude synthesis gas adiabatically through a first water-gas shift vessel containing a high temperature shift catalyst to form a first hydrogen-enriched synthesis gas at a temperature above 425 °C; (iv) cooling the first hydrogen-enriched synthesis gas by heat exchange in a first shift effluent interchanger to generate a cooled first hydrogen-enriched synthesis gas; (v) passing the cooled first hydrogen-enriched synthesis gas adiabatically through a second water-gas shift vessel containing a shift catalyst to form a second hydrogen-enriched synthesis gas, and (vi) cooling the second hydrogen-enriched synthesis gas to generate a cooled second hydrogen-enriched synthesis gas; wherein the feed gas containing methane is preheated to a temperature of 375 °C or higher by passing it through at least the first shift effluent interchanger before feeding it, without further heating, to the autothermal reformer.

## Description

### Technical Field

This invention relates to a process for producing a synthesis gas by autothermal reforming, in particular a process wherein a fired heater is not used to preheat the feeds to the autothermal reformer.

### Background to the Invention

Autothermal reforming processes in which a hydrocarbon feed is partially combusted with an oxygen-containing gas and passed through a bed of steam reforming catalyst in an autothermal reformer (ATR) to generate synthesis gases containing hydrogen, carbon monoxide and carbon dioxide are known. The hydrocarbon feed to the ATR is generally preheated by means of a fired heater that combusts a fuel gas. The fuel gas typically containing methane and/or carbon monoxide and so contributes to carbon dioxide emissions from the process.

Processes to decarbonise chemical production are gaining in interest. For example, US2013/243686 A1 discloses hydrogen production process wherein steam and a hydrocarbon feed is reacted in a pre-reformer, the pre-reformed intermediate is further reacted in an oxygen-based reformer, the reformate is shifted and then separated by a pressure swing adsorber to form a H₂ product stream and a tail gas, a first portion of the tail gas is recycled to the pre-reformer and/or the oxygen-based reformer, and a second portion of the tail gas is recycled to the pressure swing adsorber. Preheating of feeds is achieved by heat exchange with the reformate. However, using the reformate to pre-heat the feeds can have an impact on the overall heat balance, requiring importation of steam or combustion of a third portion of the tail gas as a fuel in a boiler to generate steam for the process.

### Description of the Invention

The Applicant has found an improved method of providing a synthesis gas by autothermal reforming with reduced carbon dioxide emissions.

Accordingly the invention provides a process for producing a synthesis gas, comprising the steps of:
(i) autothermally reforming a feed gas containing methane with an oxygen-containing gas in an autothermal reformer to produce a crude synthesis gas containing hydrogen, carbon monoxide, carbon dioxide and steam at a temperature above 850 °C;
(ii) cooling the crude synthesis gas to a temperature in the range 350 to 400 °C;
(iii) passing the cooled crude synthesis gas adiabatically through a first water-gas shift vessel containing a high temperature shift catalyst to form a first hydrogen-enriched synthesis gas at a temperature above 425 °C;
(iv) cooling the first hydrogen-enriched synthesis gas by heat exchange in a first shift effluent interchanger to generate a cooled first hydrogen-enriched synthesis gas;
(v) passing the cooled first hydrogen-enriched synthesis gas adiabatically through a second water-gas shift vessel containing a shift catalyst to form a second hydrogen-enriched synthesis gas, and;
(vi) cooling the second hydrogen-enriched synthesis gas to generate a cooled second hydrogen-enriched synthesis gas;
wherein the feed gas containing methane is preheated to a temperature of 375 °C or higher by passing it through at least the first shift effluent interchanger before feeding it, without further heating, to the autothermal reformer.

The second hydrogen enriched synthesis gas from the process may be used for any purpose, such as hydrogen, methanol and/or ammonia production, but is particularly suitable for producing a low carbon fuel which is predominantly hydrogen; this can be achieved by carbon dioxide removal using techniques known in the art. The low carbon fuel may be used to decarbonise chemical plants that might otherwise combust hydrocarbon containing fuels. Accordingly, the process of the present invention may be established in a new chemical plant, or an existing chemical plant may be retrofitted with the process.

The feed gas comprises methane, which is autothermally reformed with an oxygen-containing gas to form the synthesis gas. The feed gas may be any gaseous mixture containing methane. In some embodiments the feed gas comprises a substantial proportion, e.g. over 50% by volume methane, such as natural gas or biogas. In other embodiments the feed gas may contain less than 50% by volume methane, such as an off gas or waste gas stream from a chemical plant. For example, the chemical plant may produce a synthesis gas containing methane and the off-gas may be recovered from a synthesis gas purification unit, such as a membrane separation unit, temperature-swing absorption unit, a pressure-swing absorption unit or a cryogenic purification unit. In one arrangement, the off gas is recovered from a purification unit in a hydrogen plant. Alternatively, the off-gas may be a purge gas recovered from a reaction loop in a chemical plant. For example, the chemical plant may be a methanol plant that uses a synthesis gas containing methane in a methanol loop and the off gas is a purge gas recovered from the methanol loop.

Where the feed gas is an off gas from a chemical plant, it may be supplemented with a hydrocarbon feedstock, for example a portion of the hydrocarbon feedstock fed to the chemical plant. In a preferred embodiment the feed gas is supplemented with natural gas. This increases the flexibility of the process, is advantageous during start-up of the process, and when the process is used to produce a low carbon fuel, ensures there is sufficient hydrogen for the fuel requirements of the chemical plant.

The feed gas may be at a pressure in the range 10-100 bar abs. The pressure of the feed gas may usefully govern the pressure throughout the process. Operating pressure is preferably in the range 15-50 bar abs.

Steam may be added to the feed gas to form a feed gas mixture. The steam to carbon ratio in the feed gas mixture may be in the range of 0.4 to 3:1, preferably 0.6 to 2.5: 1.

The feed gas is subjected to autothermal reforming with an oxygen-containing gas in an autothermal reformer. If desired, the feed gas may be subjected to a stage of adiabatic pre-reforming upstream of the autothermal reformer to convert higher hydrocarbons in the feed gas to methane and form some hydrogen. Pre-reforming may be performed by passing a mixture of the feed gas and steam adiabatically through a fixed bed of a nickel catalyst. Known pre-reforming methods and catalysts may be used.

The autothermal reformer suitably comprises: (i) a burner disposed near the top of the reformer when in use, to which is fed the feed gas and an oxygen-containing gas, (ii) a combustion zone beneath the burner through which, typically, a flame extends, (iii) a fixed bed of particulate steam reforming catalyst below the combustion zone. In autothermal reforming, the heat for the endothermic steam reforming reactions is provided by combustion of hydrocarbon, e.g. methane, in the feed gas. The feed gas is typically fed to the top of the autothermal reformer and the oxygen-containing gas fed to the burner, mixing and combustion occur downstream of the burner generating a heated gas mixture which is brought to equilibrium as it passes through the steam reforming catalyst. If desired, some steam may be added to the feed gas and/or the oxygen-containing gas to influence the combustion and enhance the steam reforming. If desired, nitrogen may also be added to the oxygen-containing gas to influence the combustion. The autothermal reforming catalyst may comprise nickel supported on a refractory support such as rings or pellets of calcium aluminate cement, alumina, titanium dioxide, zirconium dioxide and the like. In a preferred embodiment, the catalyst comprises a layer of a higher activity layer of a particulate Ni and/or Rh catalyst, preferably supported on a stabilised zirconium dioxide, over a conventional Ni on alumina catalyst to reduce catalyst support volatilisation.

The oxygen-containing gas used in the autothermal reformer may be air, oxygen-enriched air, or oxygen gas. Oxygen gas is useful when the hydrogen product is to be used as a feedstock or where a relatively pure hydrogen gas is required as a product, however air or oxygen-enriched air are useful where the hydrogen product is to be used as a low carbon fuel and the presence of nitrogen at higher levels in the hydrogen product may be tolerated. Where the oxygen-containing gas used in the autothermal reformer comprises ≥90% vol. O₂, this may be provided by an air separation unit (ASU) or from another oxygen source. Preferably the O₂ content is ≥95% vol, ≥98% vol or ≥99% vol. The amount of oxygen-containing gas required in the autothermal reformer is determined by the desired composition of the product gas. In general, increasing the amount of oxygen, thereby increasing the temperature of the reformed gas leaving the autothermal reformer, causes the [H₂] / [CO] ratio to decrease and the proportion of carbon dioxide to decrease. The autothermally-reformed gas, or crude synthesis gas, recovered from the autothermal reformer comprises hydrogen, carbon monoxide, carbon dioxide, methane and steam. The amount of methane, which is desirably minimised, is influenced by the autothermal reformer exit temperature. The exit temperature of the crude synthesis gas recovered from the autothermal reformer is ≥ 850 °C and may be in the range 850-1300°C. Typically the exit temperature of the crude synthesis gas recovered from the autothermal reformer is ≥ 870 °C, such as ≥ 900 °C. A typical upper limit for the exit temperature is 1300°C. The exit temperature of the crude synthesis gas recovered from the autothermal reformer may be 850-1300 °C, 870-1300 °C or 900-1300 °C. The amount of methane, which is desirably minimised, is influenced by the autothermal reformer exit temperature. Operating at or above 850 °C, preferably at or above 870 °C, more preferably at or above 900 °C, usefully provides crude synthesis gases with very low residual methane levels.

It is necessary to adjust the temperature of the crude synthesis gas upstream of the water gas shift reactors. This may conveniently be done by recovering heat in a heat recovery unit, including the generation of steam in one or more boilers; the steam may usefully be used in heating or in power generation using a steam turbine. In some embodiments, steam generated by the heat recovery from the autothermal reformer may be used to supplement the steam fed to the process or a chemical plant. Extra steam generated in the heat recovery unit may be used to provide process heating or motive power for compressors or for generating electricity. The crude synthesis gas is cooled to a temperature in the range 350 to 400 °C, preferably to a temperature in the range 370 to 400 °C.

In the present invention, the cooled crude synthesis gas is subjected to two stages of water-gas shift with cooling of the resulting hydrogen-enriched gases after each stage. The first water-gas shift stage is a high temperature shift stage which generates a first hydrogen-enriched synthesis gas, which is then cooled by heat exchange in a first shift effluent interchanger to produce a cooled first hydrogen-enriched synthesis gas, simultaneously heating the feed gas to the autothermal reformer.

In preferred embodiments the first water-gas shift vessel and the second water-gas shift vessel contain a bed of a high temperature shift catalyst. The second high temperature shift stage generates a second hydrogen-enriched synthesis gas. In this arrangement it is preferred that the feed gas to the autothermal reformer is heated by heat exchange with the second hydrogen-enriched synthesis gas in a second shift effluent interchanger (to produce a cooled second hydrogen-enriched synthesis gas) followed by heat exchange with the first hydrogen-enriched synthesis gas in a first shift effluent interchanger (to produce a cooled first hydrogen-enriched synthesis gas).

The water-gas shift reaction converts carbon monoxide and steam into hydrogen and carbon dioxide. The reaction may be depicted as follows:

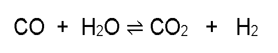

High-temperature shift may be operated adiabatically in a shift vessel at an inlet temperature in the range 300-400°C. The catalyst in the first high temperature water-gas shift vessel, and if present the second high temperature water-gas shift vessel, may be a bed of a reduced iron catalyst, such as chromia-promoted magnetite. Alternatively, a potassium promoted zinc-aluminate catalyst may be used. The high temperature shift catalyst in the first and second shift vessels may be the same or different, but is preferably the same chromia-promoted magnetite catalyst, such as KATALCO^{™} 71-7F available from Johnson Matthey PLC.

In some cases, it may be possible to achieve the desired feed gas temperature where the first water gas shift vessel contains a high temperature shift catalyst, and the second water-gas shift vessel contains a medium temperature shift catalyst. Medium temperature shift catalysts that may be used are copper-based catalysts and include copper-zinc oxide/alumina catalysts.

Steam is required for the water-gas shift reaction and so if insufficient steam is not already present in the cooled crude synthesis gas additional steam may be added, for example by direct steam injection downstream of the heat recovery.

The cooled crude synthesis gas is passed adiabatically through a first water-gas shift vessel containing a high temperature shift catalyst to form a first hydrogen-enriched synthesis gas at a temperature above 425 °C, preferably above 450 °C. The first hydrogen-enriched synthesis gas is then cooled by heat exchange in a first shift effluent interchanger to form a cooled first hydrogen-enriched synthesis gas. Where the second water-gas shift vessel contains a high temperature shift catalyst, this cooling is preferably to a temperature in the range 340 to 380 °C. Where the second water-gas shift vessel contains a medium temperature shift catalyst, this cooling is preferably to a temperature in the range 290 to 320 °C. In this latter arrangement, further cooling of the cooled first hydrogen enriched gas before the second water gas shift vessel may be achieved by the addition of steam, preferably medium pressure steam.

The cooled first hydrogen-enriched synthesis gas is passed adiabatically through a second water-gas shift vessel containing a shift catalyst to form a second hydrogen-enriched synthesis gas. Where the second water-gas shift vessel contains a high temperature shift catalyst, the resulting second hydrogen-enriched synthesis gas is preferably at a temperature above 350 °C. Where the second water-gas shift vessel contains a medium temperature shift catalyst, the resulting second hydrogen-enriched synthesis gas is preferably at a temperature above 320 °C. The second hydrogen-enriched synthesis gas is then cooled by heat exchange, e.g. in a second shift effluent interchanger or other heat exchanger. Where the second water-gas shift vessel contains a high temperature shift catalyst, this cooling is preferably to a temperature in the range 280 to 300 °C. Where the second water-gas shift vessel contains a medium temperature shift catalyst, this cooling is preferably to a temperature in the range 190 to 220 °C. One or more further stages of cooling may be applied to the hydrogen enriched gas downstream of the second shift effluent interchanger, e.g. by cooling with water and/or air. This is particularly useful when the second water-gas shift vessel contains a high temperature shift catalyst because the second hydrogen-enriched gas is too hot to be fed directly to a downstream medium- or low-temperature shift vessel.

Where the second water gas shift vessel contains a high temperature shift catalyst the process preferably uses the heat from both vessels to pre-heat the feed gas by passing it through the second shift effluent interchanger and then the first shift effluent interchanger.

Where the second water gas shift vessel contains a medium temperature shift catalyst it is preferred that steam is injected downstream of the first shift effluent interchanger and upstream of the second water gas shift vessel; this helps to reduce the temperature of the stream so that it is more appropriate for medium temperature shift and the additional steam boosts conversion in the medium temperature shift vessel. In a preferred embodiment the feed gas is pre-heated by passing it through the second shift effluent interchanger followed by the first shift effluent interchanger. Alternatively, the feed gas may be pre-heated by passing it through the first shift effluent interchanger only. In this arrangement it is preferred that the second hydrogen-enriched gas is cooled using water cooling, preferably to generate boiler feed water; such water cooling usually takes place after the second shift effluent interchanger where present. The second hydrogen-enriched gas may additionally, or alternatively, be cooled by heat exchange with other process streams e.g. the feed gas.

In the process, the feed gas is preheated to the autothermal reactor inlet temperature of 375 °C or higher, preferably 420 °C or higher, by passing it through at least the first shift effluent interchanger. The temperature at the inlet of the autothermal reformer achieved by the process ensures the desired auto-ignition of the feed gas.

Because the water-gas shift reaction is exothermic, the equilibrium is effected by temperature and to achieve very low levels of residual carbon monoxide in the hydrogen-enriched gas, it may be desirable to subject the cooled second hydrogen-enriched synthesis gas, optionally after one or more further cooling steps, to a further water-gas shift stage. This may be achieved in a medium temperature shift stage, a low temperature shift stage, an isothermal shift stage or a combination of two or more of these. A copper based catalyst is preferably used. It is preferred that the cooled second hydrogen-enriched synthesis gas, optionally after one or more further cooling steps, is treated in a single low temperature shift stage.

Medium-temperature shift and low-temperature shift stages may be performed using adiabatic water-gas shift vessels containing supported copper-catalysts, particularly copper/zinc oxide/alumina compositions. In medium-temperature shift, the hydrogen-enriched gas containing carbon monoxide and steam may be fed to the catalyst at an inlet temperature in the range 180 to 220 °C. The outlet temperature may be above 270 °C and as high as 330 °C. In low-temperature shift, a cooled hydrogen-enriched gas containing carbon monoxide (preferably ≤ 6% vol CO on a dry basis) and steam may be passed with an inlet temperature in the range 180 to 210 °C over the catalyst. The outlet carbon monoxide content may be in the range 0.1 to 1.5%, especially under 0.5% vol on a dry basis if additional steam is added. In isothermal shift, the catalyst is cooled. Whereas the term "isothermal" is used, there may be a small increase in temperature of the gas between inlet and outlet, so that the temperature of the hydrogen-enriched gas stream at the exit of the isothermal shift converter may be between 1 and 25 degrees Celsius higher than the inlet temperature. The coolant conveniently may be water under pressure such that partial, or complete, boiling takes place. The water can be in tubes surrounded by catalyst or vice versa. The resulting steam can be used in the process, for example, to drive a turbine, e.g. for electrical power, or to provide process steam for supply to the process.

The water-gas shift unit produces a hydrogen-enriched gas stream. This stream may contain unreacted steam and so following the final shift stage, the hydrogen-enriched gas may be cooled to a temperature below the dew point so that steam condenses. This forms a de-watered hydrogen-enriched gas stream. The liquid water condensate may then be separated using one or more, gas-liquid separators, which may have one or more further cooling stages between them. Any coolant may be used. Typically cooling of the hydrogen-enriched gas may be provided by boiling water under pressure coupled to a steam drum. If desired, cooling may be carried out in heat exchange with the process condensate. As a result, a stream of heated water, which may be used to supply some or all of the steam required for the process may be formed. Because the condensate may contain ammonia, methanol, hydrogen cyanide and CO₂, returning the condensate to form steam offers a useful way of returning hydrogen and carbon to the process. One or more further stages of cooling are desirable. The cooling may be performed in heat exchange in one or more stages using demineralised water, air, or a combination of these.

Following the final shift stage the hydrogen-enriched gas stream preferably contains 10 to 30% vol of carbon dioxide (on a dry basis). The hydrogen-enriched gas may be subjected, optionally after a step of cooling and condensate removal, to a step of carbon dioxide removal in a carbon dioxide removal unit to form a crude hydrogen product.

The carbon dioxide removal unit may operate by means of adsorption of carbon dioxide into a solid adsorbent, such as a molecular sieve, in a pressure swing absorption (PSA) unit, by separation of a hydrogen-rich gas using a hydrogen-permeable membrane, by absorption into a liquid in a physical wash system or a reactive wash system, or by cooling to condense carbon dioxide from the hydrogen-enriched gas stream.

In a reactive wash system, a de-watered hydrogen-enriched gas stream (i.e. a de-watered shifted gas) is contacted with a stream of a suitable absorbent liquid, such as an amine, for example monoethanolamine, diethanolamine, methyl diethanolamine and diglycolamine, particularly methyl diethanolamine (MDEA) solution so that the carbon dioxide is absorbed by the liquid to give a laden absorbent liquid and a gas stream having a decreased content of carbon dioxide. The laden absorbent liquid is then regenerated by heating, to desorb the carbon dioxide and to give a regenerated absorbent liquid, which is then recycled to the carbon dioxide absorption stage. The heating may suitably be provided by steam, hot condensate or another suitable heating medium generated by the process. Alternatively, chilled methanol or a glycol may be used to capture the carbon dioxide in a similar manner as the amine. If the carbon dioxide removal step is operated using a liquid washing step as a single pressure process, i.e. essentially the same pressure is employed in the absorption and regeneration steps, only a little recompression of the recycled carbon dioxide will be required. Carbon dioxide removal units of the types described above are commercially available.

The recovered carbon dioxide is relatively pure and so may be compressed and used for the manufacture of chemicals, purified for use in the food industry, or sent to storage or sequestration or used in enhanced oil recovery (EOR) processes. In cases where the carbon dioxide is to be compressed for storage, transportation, use in EOR processes or conversion to other chemical products, the carbon dioxide may be first dried to prevent liquid water, present in trace amounts, from condensing. For example, the carbon dioxide may be dried to a dew point ≤ 10°C by passing it through a bed of a suitable desiccant, such as a zeolite, or contacting it with a glycol in a glycol drying unit. Alternatively, at least a portion of the carbon dioxide may be sent to other processes that utilise carbon dioxide as a feed. For example, it may be desirable to feed a portion of the recovered carbon dioxide to a methanol process to generate methanol. For example, where synthesis gas fed to the methanol process is hydrogen-rich, it may be desirable to recover a portion of the carbon dioxide from the carbon dioxide removal unit and feed it to the synthesis gas upstream of the methanol synthesis reactor. The adjustment of the stoichiometry of the methanol synthesis gas using recovered carbon dioxide increases methanol production but reduces the amount of purge gas that may be recovered.

Upon the separation of the carbon dioxide, the process provides a crude hydrogen gas stream. Where an oxygen-rich gas stream (i.e. ≥90% vol, such as ≥95% vol, preferably ≥98% O₂ vol) is used in the autothermal reformer, the crude hydrogen stream may comprise 75-99% vol hydrogen, preferably 90-99% vol hydrogen, with the balance comprising one or more of methane, carbon monoxide, carbon dioxide and inert gases. Where air is used in the autothermal reformer, the hydrogen stream may comprise 50-60% vol hydrogen, with the balance comprising mostly nitrogen with minor amounts of one or more of methane, carbon monoxide, carbon dioxide and argon. The methane content of the hydrogen stream may be in the range 0.25-7.5% vol. The carbon monoxide content of the hydrogen stream may be in the range 0.5-7.5% vol. The carbon dioxide content of the hydrogen stream may be in the range 0.01-2.5% vol.

When the purity of the hydrogen stream required for downstream purposes needs to be higher than produced by the carbon dioxide removal unit, the crude hydrogen gas stream may, if desired, be passed to a purification unit to provide a purified hydrogen product stream and an off-gas stream containing carbon compounds. The purification unit may comprise a membrane system, a temperature swing adsorption system, or a pressure swing adsorption system. The purification unit is preferably a pressure-swing adsorption unit. Such units comprise regenerable porous adsorbent materials that selectively trap gases other than hydrogen and thereby purify it. The purification unit produces a pure hydrogen stream preferably with a purity greater than 99.5% vol, more preferably greater than 99.9% vol. Such systems are commercially available. The purification unit also produces an off gas. The off gas contains carbon compounds and so is preferably not used as a fuel, but rather is fed back into the process as a feed to the autothermal reformer.

If desired, at least a portion of the crude hydrogen stream or at least a portion of the purified hydrogen may be used as a low carbon fuel. This offers a potential reduction in carbon dioxide emissions from existing processes.

In the present invention, the methane-containing feed to the autothermal reformer is heated to the inlet temperature of 375 °C or higher, preferably 420 °C or higher, without further heating, such as in a fired preheater; rather the heat for the feed gas is provided by the twin shift effluent interchangers. Not including a fired heated provides a significant reduction in carbon dioxide emissions from the process. Furthermore, adding a medium- or low-temperature shift stage improves overall CO conversion to CO₂ and enhances the carbon capture achievable from the process. Improving the conversion in the water-gas shift reactors results in a number of connected benefits: reduced CO slip from the water gas shift stages allows greater CO slip from the autothermal reformer for the same overall emissions reduction. This then allows the autothermal reformer to be operated under less aggressive conditions, such as a lower outlet temperature. This provides a reduction in oxygen and feed gas flowrate, resulting in efficiency savings. The invention also provides for recovery of higher-grade heat due to the increased temperatures generated by the adiabatic water-gas shift stages.

The invention will now be further illustrated by reference to the Figures in which;

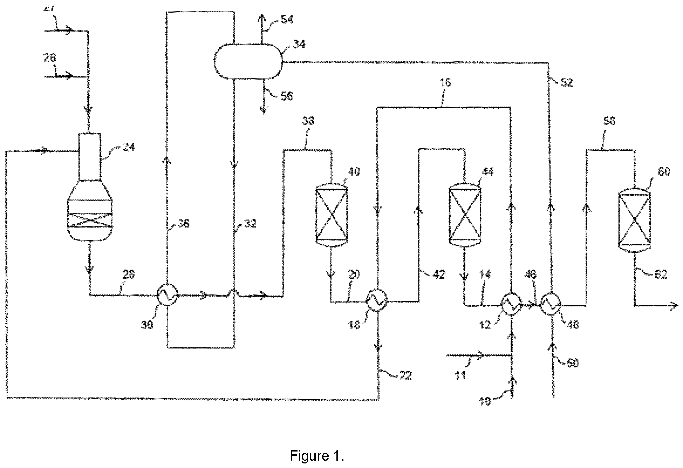

Figure 1 is a flow sheet depicting a process according to one embodiment of the invention comprising an autothermal reformer, a heat recovery unit, first and second high temperature water gas shift vessels and a low temperature shift vessel in series, with heating of a feed gas in shift effluent interchangers after each high temperature shift stage; and

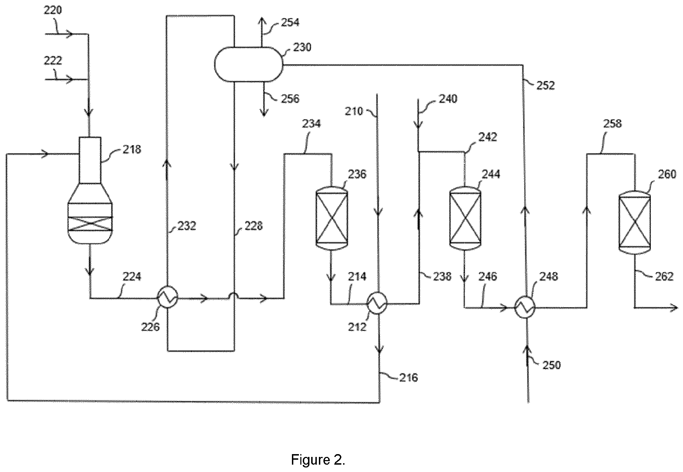

Figure 2 is a flow sheet depicting a process according to another embodiment of the invention comprising an autothermal reformer, a heat recovery unit, a high temperature water gas shift vessel followed by a medium temperature shift vessel and a low temperature shift vessel, with heating of a feed gas in the first shift effluent interchanger after the high temperature shift stage.

It will be understood by those skilled in the art that the drawings are diagrammatic and that further items of equipment such as feedstock drums, pumps, vacuum pumps, compressors, gas recycling compressors, temperature sensors, pressure sensors, pressure relief valves, control valves, flow controllers, level controllers, holding tanks, storage tanks and the like may be required in a commercial plant. Provision of such ancillary equipment forms no part of the present invention and is in accordance with conventional chemical engineering practice.

In Figure 1, a methane-containing feed gas, such as an off gas from a chemical plant, a natural gas stream or a combination of both, fed via line 10, is mixed with steam provided via line 11 and the resulting feed gas mixture then fed to a second shift effluent interchanger 12 where it is heated in heat exchange with a second hydrogen-enriched synthesis gas 14. The feed gas mixture is heated to a temperature in the range 270 to 290 °C. The second hydrogen-enriched synthesis gas 14 is cooled to a temperature in the range 280 to 300 °C. The heated feed gas mixture is then passed from interchanger 12 via line 16 to a first shift effluent interchanger 18 where it is further heated to a temperature of 420 °C or higher in heat exchange with a first hydrogen-enriched synthesis gas 20. The first hydrogen-enriched synthesis gas 20 is cooled to a temperature in the range 340 to 380 °C.

The heated feed gas mixture is then fed from the first shift effluent interchanger 18 via line 22 to the inlet of an autothermal reformer 24, where it is partially combusted in a burner with an oxygen-containing gas fed via line 26. The oxygen-containing gas fed to the autothermal reformer 24 may be air or an oxygen-containing gas stream produced by an air separation unit or by electrolysis. The partially combusted gas is then adiabatically steam reformed in a bed of steam reforming catalyst disposed beneath the burner within the autothermal reformer 24. The autothermal reforming generates a crude synthesis gas containing hydrogen, carbon monoxide, carbon dioxide and steam at a temperature above 850 °C. The crude synthesis gas is fed from the autothermal reformer 24 via line 28 to a reformed gas boiler 30, where it is cooled in heat exchange with boiling water under pressure supplied via line 32 from steam drum 34. Steam is returned from the boiler 30 to the steam drum 34 via line 36. The reformed gas boiler 30 cooled the crude synthesis gas to a temperature in the range 350 to 400 °C.

Steam may be provided by line 27 and fed to the oxygen stream 26 that is fed to the burner of the autothermal reformer 24. Steam is consumed by the steam reforming and water-gas shift reactions.

The cooled crude synthesis gas is fed from the reformed gas boiler 30 via line 38, with optional steam addition (not shown) to a first high temperature water-gas shift vessel 40 containing a high temperature shift catalyst that performs the exothermic water-gas shift reaction adiabatically to form the first hydrogen-enriched synthesis gas 20 at a temperature above 425 °C. The first hydrogen-enriched synthesis gas 20 is cooled in the first shift effluent interchanger 18 and then fed without further adjustment via line 42 to a second high temperature water-gas shift vessel 44 containing a high temperature shift catalyst that performs the exothermic water-gas shift reaction adiabatically to form the second hydrogen-enriched synthesis gas 14 at a temperature above 350 °C.

The second hydrogen-enriched synthesis gas 14 is cooled in second shift effluent interchanger 12 and then fed via line 46 to a boiler feed water heater 48, where it is cooled in heat exchange with boiler feed water fed via line 50. Heated boiler feed water is fed from the boiler feed water heater 48 via line 52 to the steam drum 34. The steam drum 34 further provides a medium pressure steam stream 54 and a steam drum blow-down stream 56 that may be used in downstream processes.

In this embodiment, a cooled second hydrogen-enriched synthesis gas is fed from the boiler feed water heater 48 via line 58 at a temperature in the range 180-210 °C to a low-temperature water-gas shift vessel 60 containing a low temperature shift catalyst that performs the exothermic water-gas shift reaction adiabatically to form the third hydrogen-enriched synthesis gas 62 at a temperature 10 to 15 degrees centigrade above dew point of the syngas.

The third hydrogen-enriched synthesis gas 62 may if desired be fed to a heat recovery unit to cool the shifted gas to below the dew point such that remaining steam condenses and fed to one or more gas-liquid separators to recover condensate (not shown).

The third hydrogen-enriched synthesis gas 62, or the dewatered hydrogen-enriched syngas, may be further processed. For example, a low carbon fuel may be generated by carbon dioxide removal using a CO₂ removal unit (not shown).

In Figure 2, a methane-containing feed gas, such as an off gas from a chemical plant, a natural gas stream or a combination of both, is fed via line 210, to a first shift effluent interchanger 212 where it is heated in heat exchange with a first hydrogen-enriched synthesis gas 214. The first hydrogen-enriched synthesis gas 214 is cooled to a temperature in the range 290 to 310 °C. The heated feed gas mixture is then fed from the first shift effluent interchanger 212 via line 216 to the inlet of an autothermal reformer 218, where it is partially combusted in a burner with an oxygen-containing gas fed via line 220. If desired steam may be added to the oxygen stream via line 222. The oxygen-containing gas fed to the autothermal reformer 218 may be air or an oxygen-containing gas stream produced by an air separation unit or by electrolysis. The partially combusted gas is then adiabatically steam reformed in a bed of steam reforming catalyst disposed beneath the burner within the autothermal reformer. The autothermal reforming generates a crude synthesis gas containing hydrogen, carbon monoxide, carbon dioxide and steam at a temperature above 850 °C. The crude synthesis gas is fed from the autothermal reformer 218 via line 224 to a reformed gas boiler 226, where it is cooled in heat exchange with boiling water under pressure supplied via line 228 from steam drum 230. Steam is returned from the boiler 226 to the steam drum 230 via line 232. The reformed gas boiler 226 cools the crude synthesis gas to a temperature in the range 350 to 400 °C.

The cooled crude synthesis gas is fed from the reformed gas boiler 226 via line 234, with optional steam addition (not shown) to a first water-gas shift vessel 236 containing a high temperature shift catalyst that performs the exothermic water-gas shift reaction adiabatically to form the first hydrogen-enriched synthesis gas 214 at a temperature above 425 °C. The first hydrogen-enriched synthesis gas 214 is cooled in the first shift effluent interchanger 212 to a temperature in the range 290 to 310 °C, then passed via line 238 to a mixing point where it is combined with medium-pressure steam fed via line 240 to form a steam-adjusted hydrogen-enriched gas at a temperature in the range 260 to 280 °C. The steam-adjusted hydrogen-enriched has is fed via line 242 to a second water-gas shift vessel 244 containing a high temperature shift catalyst that performs the exothermic water-gas shift reaction adiabatically to form a second hydrogen-enriched synthesis gas 246 at a temperature in the range 315 to 335 °C.

The second hydrogen-enriched synthesis gas 246 is cooled in a second shift effluent interchanger 248 in exchange with boiler feed water fed via line 250. In this arrangement, the second shift effluent interchanger is a boiler feed water heater. The heated boiler feed water is fed via line 252 to the steam drum 230. The second hydrogen-enriched gas is cooled to a temperature in the range 200 to 220 °C. The steam drum 230 further provides a medium pressure steam stream 254 and a steam drum blow-down stream 256 that may be used in downstream processes.

In this embodiment, the cooled second hydrogen-enriched synthesis gas is fed from the boiler feed water heater 248 via line 258 at a temperature in the range 200-220 °C to a low-temperature water-gas shift vessel 260 containing a low temperature shift catalyst that performs the exothermic water-gas shift reaction adiabatically to form the third hydrogen-enriched synthesis gas 262 at a temperature 10 to 15 degrees centigrade above dew point of the syngas.

The third hydrogen-enriched synthesis gas 262 may if desired be fed to a heat recovery unit to cool the shifted gas to below the dew point such that remaining steam condenses and fed to one or more gas-liquid separators to recover condensate (not shown).

The third hydrogen-enriched synthesis gas 262, or the dewatered hydrogen-enriched syngas, may be further processed. For example, a low carbon fuel may be generated by carbon dioxide removal using a CO₂ removal unit (not shown).

The invention will be further described by reference to the following calculated example.

### Example 1

Example 1 is an example of a flowsheet according to Figure 1 where the feed gas comprises hydrogen-depleted methanol purge gas recovered from a membrane hydrogen separation unit supplemented with 35% vol natural gas. The steam to carbon ratio was 2.2:1.

From the outlet of the autothermal reformer 24, the reformed gas 28 is cooled in a reformed gas boiler 30 to the inlet temperature of the first high temperature shift vessel 40, which is in the range of 380 - 390°C. The hydrogen-enriched gas 20 exits the first shift vessel 40 at around 470°C then passes into the first heat recovery exchanger 18, which pre-heats the feed gas to the autothermal reformer 24. The second shift vessel 44 operates at an inlet temperature of around 360°C. The outlet from this vessel 44, at around 385°C firstly passes through the feed pre-heater 12 which cools the hydrogen-enriched gas to about 290 °C, followed by a boiler feed water heater 48, utilising the remaining available duty to cool the hydrogen-enriched gas to the inlet temperature of the low-temperature shift vessel 60 of 185°C. The low-temperature vessel 60 experiences a temperature rise across this vessel of around 20 to 25°C. The hydrogen-enriched gas outlet from the low-temperature shift vessel 60 then passes into further heat recovery, e.g. a CO₂ unit reboiler duty and feed gas pre-heating, before being passed to a CO₂ removal unit for the CO₂ to be removed and a hydrogen fuel stream to be produced. The feed gas mixture at about 187 °C is heated in pre-heaters 12 and 18 to 420 °C and fed directly without further heating to the autothermal reformer 24.

In a comparative example using a single high temperature shift vessel and heat recovery and a fired heater, the autothermal reformer exit temperature was reduced from 980°C to 950°C; natural gas usage reduced from 1104 kmol/h to 1084 kmol/h (-1.81%); oxygen usage reduced from 1191 kmol/h to 1146 kmol/h (-3.77%).

## Claims

1. A process for producing a synthesis gas, comprising the steps of:
(i) autothermally reforming a feed gas containing methane with an oxygen-containing gas in an autothermal reformer to produce a crude synthesis gas containing hydrogen, carbon monoxide, carbon dioxide and steam at a temperature above 850 °C;
(ii) cooling the crude synthesis gas to a temperature in the range 350 to 400 °C;
(iii) passing the cooled crude synthesis gas adiabatically through a first water-gas shift vessel containing a high temperature shift catalyst to form a first hydrogen-enriched synthesis gas at a temperature above 425 °C;
(iv) cooling the first hydrogen-enriched synthesis gas by heat exchange in a first shift effluent interchanger to generate a cooled first hydrogen-enriched synthesis gas;
(v) passing the cooled first hydrogen-enriched synthesis gas adiabatically through a second water-gas shift vessel containing a shift catalyst to form a second hydrogen-enriched synthesis gas, and;
(vi) cooling the second hydrogen-enriched synthesis gas to generate a cooled second hydrogen-enriched synthesis gas;
wherein the feed gas containing methane is preheated to a temperature of 375 °C or higher by passing it through at least the first shift effluent interchanger before feeding it, without further heating, to the autothermal reformer.

2. A process according to claim 1, wherein the feed gas comprises over 50% by volume methane.

3. A process according to claim 1, wherein the feed gas comprises less than 50% by volume methane.

4. A process according to claim 3, wherein the off gas is an off gas recovered from a synthesis gas purification unit in a hydrogen plant.

5. A process according to claim 3, wherein the off gas is an off gas recovered from a methanol loop in a methanol plant.

6. A process according to any of claims 3 to 5, wherein the feed gas is supplemented with natural gas.

7. A process according to any of claims 1 to 6, wherein the crude synthesis gas is cooled by recovering heat in a heat recovery unit, including the generation of steam in one or more boilers.

8. A process according to any of claims 1 to 7, wherein the first water-gas shift vessel and the second water-gas shift vessel contain a bed of a high temperature shift catalyst.

9. A process according to claim 8, wherein the feed gas to the autothermal reformer is heated by heat-exchange with the second hydrogen-enriched synthesis gas followed by heat exchange with the first hydrogen-enriched synthesis gas.

10. A process according to any of claims 1 to 7, wherein the first water-gas shift vessel contains a high temperature shift catalyst and the second water-gas shift vessel contains a medium temperature shift catalyst.

11. A process according to claim 10, wherein steam is injected downstream of the first shift effluent interchanger and upstream of the second water-gas shift vessel.

12. A process according to claim 10 or claim 11, wherein the feed gas is pre-heated by passing it through the first shift effluent interchanger only.

13. A process according to any one of claims 1 to 12, wherein the cooled second hydrogen-enriched synthesis gas is subjected to a further water-gas shift stage selected from a medium temperature shift stage, a low temperature shift stage, an isothermal shift stage or a combination of two or more of these.

14. A process according to any one of claims 1 to 13, wherein following the final shift stage, the hydrogen-enriched gas is cooled to a temperature below the dew point so that steam condenses with recovery of condensate to form a de-watered hydrogen-enriched gas stream.

15. A process according to any one of claims 1 to 14, wherein at least a portion of the crude hydrogen stream is used as a low carbon fuel gas in a fired heater or fired steam reformer.
